# EUROPÄISCHE PATENTSCHRIFT

(11) **EP 1 514 038 B1**
(45) Veröffentlichungstag und Bekanntmachung des Hinweises auf die Patenterteilung: **22.03.2006**
(21) Anmeldenummer: 03727472.7
(22) Anmeldetag: 14.05.2003
(51) Int. Cl.: F16D 69/02

(54) **EINRICHTUNG ZUM ERFASSEN DER SPRITZWASSERMENGE, DER EIN BREMSBELAG AUF NASSER FAHRBAHN AUSGESETZT IST**
DEVICE FOR DETECTING THE AMOUNT OF SPLASH WATER TO WHICH A BRAKE PAD IS SUBJECTED ON A WET ROADWAY
DISPOSITIF POUR DETECTER LA QUANTITE D'EAU PROJETEE A LAQUELLE UNE GARNITURE DE FREIN EST EXPOSEE SUR CHAUSSEE HUMIDE

(30) Priorität: 31.05.2002 DE 10224552
(43) Veröffentlichungstag der Anmeldung: 16.03.2005
(73) Patentinhaber: TMD Friction Services GmbH, 51381 Leverkusen (DE)
(72) Erfinder: WIATEREK, Christian, 51519 Odenthal (DE)
(74) Vertreter: Schmidt, Frank-Michael
(86) Internationale Anmeldenummer: PCT/EP2003/005018
(87) Internationale Veröffentlichungsnummer: WO 2003/102440

(56) Entgegenhaltungen:
- EP-A- 0 959 262
- EP-A- 1 179 687
- US-A- 5 098 758
- US-A1- 2001 024 917
- DATABASE WPI Section Ch, Week 200020 Derwent Publications Ltd., London, GB; Class G04, AN 2000-233152 XP002253635 & JP 2000 053945 A (HITACHI CHEM CO LTD), 22. Februar 2000 (2000-02-22)

## Beschreibung

Die vorliegende Erfindung betrifft eine Einrichtung zum Erfassen der Spritzwassermenge, der ein Bremsbelag auf nasser Fahrbahn ausgesetzt ist, sowie eine Verwendung der Einrichtung.

Für Bremsbeläge ist es wichtig, daß sie auch bei Nässe stabile Reibwerte zeigen. Grundsätzlich wirkt sich Nässe in Form von Spritzwasser negativ auf die Reibwerte eines Bremsbelages aus. Es hat sich gezeigt, daß bei ungünstigen Fahrzeug- und/oder Bremsenkonstruktionen der Bremsweg eines Fahrzeugs im Winter unter Einfluß nicht nur von Nässe, sondern auch von Streusalz bis auf das Doppelte steigen kann. Dies ist für die Verkehrssicherheit von entscheidender Bedeutung. Außerdem werden das Komfortverhalten und die Korrosion des Fahrzeugs durch eine unnötig hohe Zufuhr von Spritzwasser negativ beeinflußt.

Aufgabe der vorliegenden Erfindung ist es daher, eine Einrichtung der eingangs genannten Art zur Verfügung zu stellen sowie eine Verwendung für diese Einrichtung.

Erfindungsgemäß wird diese Aufgabe gelöst durch eine Einrichtung zum Erfassen der Spritzwassermenge, der ein Bremsbelag auf nasser Fahrbahn ausgesetzt ist, mit einem Test-Bremsbelag, dessen Reibbelag derart hygroskopisch ausgebildet ist, daß er wenigstens 5%, vorzugsweise wenigstens 10% Wasser aufnehmen kann.

Als hygroskopisch bezeichnet man Stoffe, die aus einem Wasserdampf-Gas-Gemisch, z.B. Luft, den Wasserdampf entziehen. Auch bei direktem Kontakt mit Wasser, beispielsweise bei der Erfindung bei Kontakt mit Spritzwasser, nehmen hygroskopische Stoffe Wasser auf. Das Wasser kann entweder durch Hydratation aufgenommen werden, wobei Wassermoleküle an polare Gruppen von im Wasser gelösten Molekülen auf der Basis elektrostatischer Ion-Dipol-Wechselwirkung angelagert werden, oder unter Bildung von Wasserstoffbrückenbindungen. Durch Energiezufuhr kann das aufgenommene Wasser schonend wieder entfernt werden. Dies wird als Trocknen bezeichnet. Der Vorgang der Wasseraufnahme und des Trocknens geschieht in gewissen Temperaturbereichen ohne Molekülumwandlung oder - spaltung und ist daher in diesen Bereichen reversibel. Daher können die erfindungsgemäßen Test-Bremsbeläge bei Verwendung geeigneter Testbedingungen wiederholt verwendet werden, sofern sie dazwischen ausreichend getrocknet werden. Die Materialkosten können auf diese Weise auf ein Minimum beschränkt werden.

Überraschenderweise hat sich gezeigt, daß keine komplizierten Testkonstruktionen zur Ermittlung der Strömungsverhältnisse des Spritzwassers erforderlich sind. Die Fahrzeuge können in einer Testphase einfach durch Ersatz ihrer serienmäßigen Bremsbeläge durch Test-Bremsbeläge getestet werden. Da der erfindungsgemäße Reibbelag hygroskopisch ist, besteht ein direkter Zusammenhang zwischen der Wasseraufnahme des Reibbelages und der Menge der dem Reibbelag zugeführten Feuchte, in Form von Spritzwasser und Luftfeuchtigkeit. Der erfindungsgemäße Test-Bremsbelag erlaubt somit eine genaue Bestimmung der den Bremsen zugeführten Feuchte. Aus dieser zugeführten Feuchte läßt sich entweder mit Hilfe von Vergleichsmessungen oder rechnerisch die Spritzwassermenge, der ein Bremsbelag auf nasser Fahrbahn ausgesetzt ist, bestimmen. Im einfachsten Fall kann der Einfluß der Luftfeuchtigkeit vernachlässigt werden. Auf diese Weise können die für eine Optimierung der Fahrzeugkonstruktion, insbesondere der Unterbodengruppe und/oder der Bremsen hinsichtlich der Zufuhr von Spritzwasser erforderlichen Informationen ohne besonderen Aufwand und dementsprechend kostengünstig gewonnen werden.

Die obige Aufgabe wird erfindungsgemäß ferner gelöst durch eine Verwendung der erfindungsgemäßen Einrichtung, wobei
a) die Anfangsmasse des Test-Bremsbelages bestimmt wird,
b) der Test-Bremsbelag in ein Fahrzeug eingebaut wird,
c) das Fahrzeug vorgegebenen Betriebsbedingungen ausgesetzt wird,
d) danach die Endmasse des Test-Bremsbelages bestimmt wird und
e) aus der Differenz zwischen der Anfangs- und der Endmasse die Wasseraufnahme des Reibbelages bestimmt wird.

Eine besonders hohe Genauigkeit bei der Bestimmung der Wasseraufnahme kann erzielt werden, wenn der Test-Bremsbelag vor Schritt d) getrocknet wird. Hierdurch läßt sich an der Oberfläche des Test-Bremsbelages haftendes Wasser entfernen, so daß es nicht in die Bestimmung der Endmasse des Test-Bremsbelages eingeht. Die Trocknung erfolgt derart, daß das vom Test-Bremsbelag aufgenommene Wasser nicht ausgetrieben wird. Es handelt sich also um einen kurzfristigen Trocknungsvorgang. Besonders vorteilhaft ist es dabei, den Test-Bremsbelag mit einer niedrig siedenden Flüssigkeit abzuspülen. Hierzu eignen sich vor allen Dingen Aceton oder Ethanol. Diese Flüssigkeiten entfernen das oberflächenwasser, und der anschließende Trocknungsvorgang dient dann lediglich dazu, die Spülflüssigkeit abzudampfen. Der hierzu erforderliche Energieeintrag ist zu gering, um das vom Test-Bremsbelag aufgenommene Wasser auszutreiben.

Vorteilhafterweise werden die Schritte a) bis e) für alle Bremsbeläge eines Fahrzeugs durchgeführt. Regelmäßig treten an den inneren Bremsbelägen der Fahrzeuge nämlich eher Probleme mit Spritzwasser auf als an den äußeren Belägen. Durch die Bestimmung der Wasseraufnahme aller Reibbeläge eines Fahrzeugs kann die Fahrzeugkonstruktion bzw. die Bremsenkonstruktion wesentlich besser, schneller und kostengünstiger optimiert werden.

Ein bevorzugtes Ausführungsbeispiel ist dadurch gekennzeichnet, daß für die Wasseraufnahme ein Schwellwert festgelegt wird und die Fahrzeug- und/oder Bremsenkonstruktion geändert wird, wenn die im Schritt e) ermittelte Wasseraufnahme größer als der Schwellwert ist.

Der erfindungsgemäße Test-Bremsbelag ist vorteilhafterweise dadurch gekennzeichnet, daß der Reibbelag wenigstens 15 Vol-%, vorzugsweise wenigstens 17 Vol-% hygroskopisches Bindemittel enthält. Durch einen im Vergleich zum Stand der Technik wesentlich höheren Anteil an Bindemitteln kann die hygroskopische Eigenschaft des Reibbelages problemlos realisiert werden, ohne daß spezielle Zusatzstoffe benötigt werden oder eine mechanische Behandlung des Reibbelages zur Erzielung eines porösen Körpers erforderlich ist. Das Bindemittel kann je nach gewünschtem Fertigungsprozeß, beispielsweise mit oder ohne Scorchen, beliebig gewählt werden. In der Regel werden Harze (unmodifiziert oder auch organisch bzw. anorganisch modifiziert) als Bindemittel verwendet. Besonders bewährt haben sich unter den organischen Modifikationen die Kresol-, Alkyl-, CSNL-, Epoxid-, NBR-, Resorcin-Aryl-, SBR- und CR-Modifikationen und unter den anorganischen Modifikationen die Bor-, Phosphor-, Silikon- und Chrom-Modifikationen.

Es hat sich bewährt, daß der Reibbelag schmierstoffrei ist, insbesondere keine Sulfide oder Graphite enthält. Eine Weiterbildung der Erfindung ist dadurch gekennzeichnet daß der Reibbelag zusätzlich oder alternativ schleifmittelfrei ist, insbesondere kein Al₂O₃, kein Zr-Silikat und kein SiC enthält.

Unter Schleifmitteln sind in diesem Fall abrasive Reibkörner im klassischen Sinn zu verstehen. Es hat sich gezeigt, daß ein schmierstoffreier und schleifmittelfreier Reibbelag zum Testen der Fahrzeugkonstruktion hinsichtlich der Zufuhr von Spritzwasser besonders geeignet ist, da er nicht nur entsprechend hygroskopisch eingestellt werden kann, sondern auch ausgezeichnete reibtechnische Eigenschaften aufweist.

In Weiterbildung der Erfindung wird vorgeschlagen, daß der Reibbelag 8 Vol-% bis 12 Vol-%, vorzugsweise 10 Vol-% Fasern enthält.

Vorteilhafterweise enthält der Reibbelag als Fasern Aramidfasern und/oder Polyacrylnitrilfasern. Zur Verminderung der elektrostatischen Aufladung können Aramidfasern verwendet werden, die bereits bis zu 5% Wasser enthalten. Diese sind in der Lage, unter idealen Bedingungen dauerhaft mehr als 15% Wasser zu speichern.

Ein bevorzugtes Ausführungsbeispiel ist dadurch gekennzeichnet, daß der Reibbelag
6 Vol-% bis 14 Vol-% vorzugsweise 10 Vol-% Fasern,
5 Vol-% bis 13 Vol-%, vorzugsweise 9 Vol-% Kautschuk,
13 Vol-% bis 21 Vol-%, vorzugsweise 17 Vol-% Bindemittel,
10 Vol-% bis 18 Vol-%, vorzugsweise 14 Vol-% amorphen Quarz,
1 Vol-% bis 9,5 Vol-%, vorzugsweise 5,5 Vol-% Glimmer,
10,5 Vol-% bis 18,5 Vol-%, vorzugsweise 14,5 Vol-% Magnesium-Aluminium-Silikat,
5,5 Vol-% bis 13,5 Vol-%, vorzugsweise 9,5 Vol-% Kaliumtitantat,
6,5 vol-% bis 14,5 vol-%, vorzugsweise 10,5 Vol-% Stahlwolle und
6 Vol-% bis 14 Vol-%, vorzugsweise 10 Vol-% Aluminiumhydrosilikat enthält.

Als Glimmer kann sowohl expandierter als auch nicht expandierter Glimmer verwendet werden. Kaliumtitantat kann als Faser oder in Pulverform enthalten sein. Die Stahlwolle dient der mechanischen Festigkeit. Sie ist naturmäßig nicht hygroskopisch.

Zu Testzwecken wurde ein entsprechender Reibbelag bei 95% Luftfeuchte gelagert. Es zeigte sich, daß das Material bereits nach zwei Tagen 3,4% Wasser aufnahm, nach 5 Tagen 5,8%, nach 14 Tagen 10,2%, nach 35 Tagen 13,4% und nach 49 Tagen 15%. Dieser langsame, kontinuierliche Anstieg der Wasseraufnahme ist zum Erfassen der Spritzwassermenge, der ein Bremsbelag auf nasser Fahrbahn ausgesetzt ist, optimal, da der Reibbelag in der Testphase, wenn er mit Wasser in Kontakt kommt, nicht sofort seine maximale Wasseraufnahme erreichen darf. Auf der anderen Seite darf die Wasseraufnahme nicht zu langsam erfolgen, da die Testphase vertretbare zeitliche Grenzen nicht überschreiten soll. Mit der genannten Zusammensetzung ist dies problemlos möglich. Darüber hinaus zeigt ein Test-Bremsbelag mit einem Reibbelag dieser Zusammensetzung bei der reibtechnischen Prüfung stabile Reibwerte zwischen µ = 0,3 und 0,4. Auch der Kaltreibwert liegt mit µ = 0,4 sehr günstig und höher als bei manchen Serienmaterialien. Selbst Panikbremsungen aus 100 und 180 km/h sind stabil. Bemerkenswert ist, daß ein derartiger Test-Bremsbelag außerdem erstaunlich kurze Momentenverläufe aufweist. Erst beim ersten Temperaturfading, nämlich beim Ansteigen der Endtemperatur auf 600°C fällt der Reibwert deutlich ab. Insgesamt hat ein Test-Bremsbelag mit einem Reibbelag der genannten Zusammensetzung bei Temperaturbelastungen bis ca. 400°C den bekannten weniger hygroskopischen Serienmaterialien vergleichbar gute reibtechnische Eigenschaften. Bei den in der Testphase durchgeführten Bremsungen muß folglich nicht auf besondere Materialeigenschaften des verwendeten Test-Bremsbelags Rücksicht genommen werden. Daher können die Betriebsbedingungen, denen das Fahrzeug in der Testphase ausgesetzt wird, möglichst real gewählt werden.

Ein weiterer Vorteil der genannten Zusammensetzung ist, daß ein entsprechder Test-Bremsbelag keine wahrnehmbaren Geräusche verursacht und insbesondere ein sehr gutes Knarzverhalten aufweist.

Als Kautschuk wird aus Gründen der Kompressibilität vorzugsweise ein hygroskopischer Kautschuk verwendet. Vorzugsweise enthält der Reibbelag als Kautschuk Acrylnitril-Butadien-Kautschuk.

Auf der Basis der mit dem erfindungsgemäßen Test-Bremsbelag erfaßbaren Spritzwassermenge, der ein Bremsbelag auf nasser Fahrbahn ausgesetzt ist, können die Automobil-und/oder Bremsenhersteller Abhilfemaßnahmen zur Verringerung der Spritzwasserzufuhr entwickeln. Sie können die Konstruktion des Fahrzeugs oder der Bremsen ändern oder zusätzliche Elemente, beispielsweise Schirmblenden oder Abweisspoiler einbauen. Auf diese Weise kann der Bremsweg bei Nässe verkürzt werden, und die Fahrzeug- und damit die Verkehrssicherheit können wesentlich erhöht werden. Gleichzeitig wird die Korrosion verringert.

Im Rahmen des Erfindungsgedankens sind zahlreiche Weiterbildungen möglich. Der Reibbelag kann beliebig stark hygroskopisch sein. Ferner kann die Zusammensetzung des Reibbelages beliebig variiert werden, sofern ein Mindestmaß an reibtechnischen Eigenschaften erhalten bleibt. Statt der Bestimmung der Anfangsmasse und der Endmasse des Test-Bremsbelages können auch die entsprechenden Anfangsvolumina und Endvolumina bestimmt werden.

## Patentansprüche

1. Einrichtung zum Erfassen der Spritzwassermenge, der ein Bremsbelag auf nasser Fahrbahn ausgesetzt ist, mit einem Test-Bremsbelag, dessen Reibbelag derart hygroskopisch ausgebildet ist, daß er wenigstens 5%, vorzugsweise wenigstens 10% Wasser aufnehmen kann.

2. Einrichtung nach Anspruch 1, **dadurch gekennzeichnet, daß** der Reibbelag wenigstens 15 Vol-%, vorzugsweise wenigstens 17-Vol% hygroskopisches Bindemittel enthält.

3. Einrichtung nach Anspruch 1 oder 2, **dadurch gekennzeichnet, daß** der Reibbelag schmierstofffrei ist, insbesondere keine Sulfide oder Graphite enthält.

4. Einrichtung nach einem der Ansprüche 1 bis 3, **dadurch gekennzeichnet, daß** der Reibbelag schleifmittelfrei ist, insbesondere kein Al₂O₃, kein Zr-silikat und kein SiC enthält.

5. Einrichtung nach einem der Ansprüche 1 bis 4, **dadurch gekennzeichnet, daß** der Reibbelag 8 Vol-% bis 12 Vol-%, vorzugsweise 10 Vol-% Fasern enthält.

6. Einrichtung nach Anspruch 5, **dadurch gekennzeichnet, daß** der Reibbelag als Fasern Aramidfasern und/oder Polyacrylnitrilfasern enthält.

7. Einrichtung nach einem der Ansprüche 1 bis 4, **dadurch gekennzeichnet, daß** der Reibbelag
6 vol-% bis 14 Vol-% vorzugsweise 10 Vol-% Fasern,
5 Vol-% bis 13 Vol-%, vorzugsweise 9 Vol-% Kautschuk,
13 Vol-% bis 21 Vol-%, vorzugsweise 17 Vol-% Bindemittel,
10 Vol-% bis 18 Vol-%, vorzugsweise 14 Vol-% amorphen Quarz,
1 Vol-% bis 9,5 Vol-%, vorzugsweise 5,5 Vol-% Glimmer,
10,5 Vol-% bis 18,5 Vol-%, vorzugsweise 14,5 Vol-% Magnesium-Aluminium-Silikat,
5,5 Vol-% bis 13,5 Vol-%, vorzugsweise 9,5 Vol-% Kaliumtitantat,
6,5 Vol-% bis 14,5 Vol-%, vorzugsweise 10,5 Vol-% Stahlwolle und
6 Vol-% bis 14 Vol-%, vorzugsweise 10 Vol-% Aluminiumhydrosilikat enthält.

8. Einrichtung nach Anspruch 7, **dadurch gekennzeichnet, daß** der Reibbelag als Kautschuk Acrylnitril-Butadien-Kautschuk enthält.

9. Verwendung der Einrichtung nach einem der Ansprüche 1 bis 8, wobei
a) die Anfangsmasse des Test-Bremsbelages bestimmt wird,
b) der Test-Bremsbelag in ein Fahrzeug eingebaut wird,
c) das Fahrzeug vorgegebenen Betriebsbedingungen ausgesetzt wird,
d) danach die Endmasse des Test-Bremsbelages bestimmt wird und
e) aus der Differenz zwischen der Anfangs- und der Endmasse die Wasseraufnahme des Reibbelages bestimmt wird.

10. Verwendung nach Anspruch 9, **dadurch gekennzeichnet, daß** der Test-Bremsbelag vor Schritt d) getrocknet wird.

11. Verwendung nach Anspruch 9 oder 10, **dadurch gekennzeichnet, daß** die Schritte a) bis e) für alle Bremsbeläge eines Fahrzeugs durchgeführt werden.

12. Verwendung nach einem der Ansprüche 9 bis 11, **dadurch gekennzeichnet, daß** für die Wasseraufnahme ein Schwellwert festgelegt wird und die Fahrzeug- und/oder Bremsenkonstruktion geändert wird, wenn die im Schritt e) ermittelte Wasseraufnahme größer als der Schwellwert ist.

## Claims

1. Apparatus for detecting the amount of spray to which a brake lining is exposed on a wet roadway, with a test brake lining, the friction lining of which is constructed hygroscopically in such a way that it can absorb at least 5%, preferably at least 10% water.

2. Apparatus as claimed in Claim 1, **characterised in that** the friction lining contains at least 15% by volume, preferably at least 17% by volume of hygroscopic binder.

3. Apparatus as claimed in Claim 1 or 2, **characterised in that** the friction lining is lubricant-free, and in particular contains no sulphides or graphites.

4. Apparatus as claimed in any one of Claims 1 to 3, **characterised in that** the friction line is abrasive-frce, and in particular contains no Al₂O₃, no Zr silicate and no SiC.

5. Apparatus as claimed in any one of Claims 1 to 4, **characterised in that** the friction lining contains 8% by volume to 12% by volume, preferably 10% by volume of fibres.

6. Apparatus as claimed in Claim 5, **characterised in that** the fibres contained in the friction lining are aramid fibres and/or polyacrylonitrile fibres.

7. Apparatus as claimed in any one of Claims 1 to 4, **characterised in that** the friction lining contains
6% by volume to 14% by volume, preferably 10% by volume of fibres,
5% by volume to 13% by volume, preferably 9% by volume of rubber,
13% by volume to 21% by volume, preferably 17% by volume of binder,
10% by volume to 18% by volume, preferably 14% by volume of amorphous quartz,
1% by volume to 9.5% by volume, preferably 5.5% by volume of mica,
10.5% by volume to 18.5% by volume, preferably 14% by volume of magnesium aluminium silicate,
5.5% by volume to 13.5% by volume, preferably 9.5% by volume of potassium titanate,
6.5% by volume to 14.5% by volume, preferably 10.5% by volume of steel wool,
6% by volume to 14% by volume, preferably 10% by volume of aluminium hydrosilicate.

8. Apparatus as claimed in Claim 7, **characterised in that** the rubber contained in the friction lining is acrylonitrile butadiene rubber.

9. Use of the apparatus as claimed in any one of Claims 1 to 8, in which
a) the initial mass of the test brake lining is ascertained,
b) the test brake lining is installed in a vehicle,
c) the vehicle is subjected to predetermined operating conditions,
d) then the final mass of the test brake lining is ascertained, and
c) the water absorption of the friction lining is ascertained from the difference between the initial mass and the final mass.

10. Use as claimed in Claim 9, **characterised in that** the test brake lining is dried before step d).

11. Use as claimed in Claim 9 or 10, **characterised in that** steps a) to e) are carried out for all brake linings of a vehicle.

12. Use as claimed in Claims 9 to 11, **characterized in that** a threshold is determined for the water absorption and the vehicle and/or brake structure is changed, if the water absorption determined in step e) is greater than the threshold.

## Revendications

1. Dispositif pour détecter la quantité d'eau de projection à laquelle est exposée une garniture de frein sur route mouillée, le dispositif présentant une garniture de frein de test à garniture de friction hygroscopique capable d'absorber au moins 5 % et de préférence au moins 10 % d'eau.

2. Dispositif selon la revendication 1, **caractérisé en ce que** la garniture de friction contient au moins 15 % en volume et de préférence au moins 17 % en volume de liant hygroscopique.

3. Dispositif selon les revendications 1 ou 2, **caractérisé en ce que** la garniture de friction ne présente pas de lubrifiant et ne contient en particulier ni sulfure ni graphite.

4. Dispositif selon l'une des revendications 1 à 3, **caractérisé en ce que** la garniture de friction ne présente pas d'abrasif et en particulier pas de SiC, d'Al₂O₃ ou de silicate de Zr.

5. Dispositif selon l'une des revendications 1 à 4, **caractérisé en ce que** la garniture de friction contient de 8 % en volume à 12 % en volume et de préférence 10 % en volume de fibres.

6. Dispositif selon la revendication 5, **caractérisé en ce que** les fibres contenues dans la garniture de friction sont des fibres d'aramide et/ou de polyacrylonitrile.

7. Dispositif selon l'une des revendications 1 à 4, **caractérisé en ce que** la garniture de friction contient :
de 6 % en volume à 14 % en volume et de préférence 10 % en volume de fibres,
de 5 % en volume à 13 % en volume et de préférence 9 % en volume de caoutchouc,
de 13 % en volume à 21 % en volume et de préférence 17 % en volume de liant,
de 10 % en volume à 18 % en volume et de préférence 14 % en volume de quartz amorphe,
de 1 % en volume à 9,5 % en volume et de préférence 5,5 % en volume de mica,
de 10,5 % en volume à 18,5 % en volume et de préférence 14,5 % en volume de silicate de magnésium et d'aluminium,
de 5,5 % en volume à 13,5 % en volume et de préférence 9,5 % en volume de titanate de potassium,
de 6,5 % en volume à 14,5 % en volume et de préférence 10,5 % en volume de laine d'acier et
de 6 % en volume à 14 % en volume et de préférence 10 % en volume d'hydrosilicate d'aluminium.

8. Dispositif selon la revendication 7, **caractérisé en ce que** le caoutchouc contenu dans la garniture de friction est du caoutchouc à l'acrylonitrile et au butadiène.

9. Utilisation du dispositif selon l'une des revendications 1 à 8, dans laquelle :
a) on détermine la masse initiale de la garniture de frein de test,
b) on monte la garniture de frein de test dans un véhicule,
c) on expose le véhicule à des conditions prédéterminées de fonctionnement,
d) on détermine la masse finale de la garniture de frein de test et
e) on détermine l'absorption d'eau de la garniture de frein à partir de la différence entre la masse initiale et la masse finale.

10. Utilisation selon la revendication 9, **caractérisée en ce qu'**on sèche la garniture de frein de test avant l'étape d).

11. Utilisation selon les revendications 9 ou 10, **caractérisée en ce que** l'on exécute les étapes a) à e) pour toutes les garnitures de frein d'un véhicule.

12. Utilisation selon l'une des revendications 9 à 11, **caractérisée en ce qu'**on fixe un seuil d'absorption d'eau et **en ce qu'**on modifie la structure du véhicule et/ou des freins lorsque l'absorption d'eau déterminée lors de l'étape e) est supérieure au seuil.
